# EUROPÄISCHE PATENTSCHRIFT

(11) **EP 0 413 102 B1**
(45) Veröffentlichungstag und Bekanntmachung des Hinweises auf die Patenterteilung: **31.08.1994**
(21) Anmeldenummer: 90111123.7
(22) Anmeldetag: 12.06.1990
(51) Int. Cl.: G06K 17/00, G06K 7/00

(54) **Verfahren und Einrichtung zum Positionieren eines Gegenstandes und eines Bearbeitungskopfes**
Method and device for the positioning of an object and of a machine head
Procédé et appareil pour positionner un objet et tête de traitement

(30) Priorität: 16.06.1989 DE 3919784
(43) Veröffentlichungstag der Anmeldung: 20.02.1991
(73) Patentinhaber: Siemens Nixdorf Informationssysteme Aktiengesellschaft, 33102 Paderborn (DE)
(72) Erfinder: Brühl, Henry Ralph (Dipl.-Ing.), D-4790 Paderborn (DE)
(74) Vertreter: Fuchs, Franz-Josef, Dr.-Ing.

(56) Entgegenhaltungen:
- EP-A- 0 341 524
- CH-A- 641 286
- DE-A- 2 458 927
- DE-B- 2 133 208

## Beschreibung

Die Erfindung betrifft ein Verfahren der im Oberbegriff des Ansprüches 1 genannten Art sowie eine Einrichtung der im Oberbegriff des Ansprüches 5 genannten Art.

Es ist bekannt, zum Zwecke der Positionierung eines Gegenstandes in einer Bearbeitungsmaschine, beispielsweise eines Sparbuches in einem Bankdrucker, auf den Gegenstand eine Marke aufzubringen, die beim Durchlauf des Gegenstandes durch die Bearbeitungsmaschine von einem Sensor gelesen wird, welcher dann ein Signal an eine Positioniersteuerung der Bearbeitungsmaschine abgibt. Dieses Signal verursacht beispielsweise ein Anhalten des Positionierantriebes und/oder einen Bearbeitungsvorgang. Ein derartiges Positionierverfahren findet in zahlreichen technischen Bereichen, z.B. in der Drucktechnik, bei der Bearbeitung von Papier, Textilien, Kunststoffbahnen usw. Verwendung. Als Bearbeitungsvorgänge seien beispielhaft das Stanzen und Schneiden von Papier-, Karton- oder Textilmaterialien, das Bohren und Fräsen von metallischen Gegenständen und insbesondere das Bedrucken von Druckträgern sowie das Lesen von bedruckten Druckträgern (OCR-Lesung) genannt.

Um den zu bearbeitenden Gegenstand relativ zum Bearbeitungskopf zu positionieren, kann entweder der Bearbeitungskopf relativ zu dem fest in der Maschine eingespannten Gegenstand oder umgekehrt der Gegenstand relativ zum festmontierten Bearbeitungskopf verfahren werden. Die korrekte Position des Gegenstandes ist dann erreicht, wenn die zu bearbeitende Stelle dieses Gegenstandes exakt zum Bearbeitungskopf ausgerichtet ist. Das Erreichen dieser exakten Position wird dadurch erkannt, daß gleichzeitig eine bestimmte auf den Gegenstand aufgebrachte Markierung einen Sensor passiert, wodurch ein Signal erzeugt wird, welches das Erreichen der exakten Arbeitsposition an die Steuerung meldet.

Da der Sensor aus konstruktiven Gründen räumlich nicht mit dem Bearbeitungskopf zusammengefaßt werden kann, ist er bei bekannten Bearbeitungsmaschinen im allgemeinen mit einem bestimmten Abstand zum Bearbeitungskopf angeordnet.

Die DE 32 15 225 A1, aus der die Oberbegriffe der Ansprüche 1 und 5 hervor gehen, zeigt eine kombinierte Druck- und Leseeinrichtung, bei der neben dem Nadelführungsmundstück eines Druckkopfes ein Lesekopf angeordnet ist. Dieser Lesekopf hat neben seiner Fähigkeit, OCR-Schrift zu lesen, auch die Aufgabe, als Sensor für Zeilenmarkierungen zu dienen und entsprechende, die exakte Zeilenpositionierung meldende Signale an die Positioniersteuerung zu geben. Bezüglich der hier relevanten Zeilenpositionierbewegung des Druckträgers relativ zum Druckkopf ist der als Sensor dienende Lesekopf neben dem Bearbeitungskopf angeordnet, d.h., daß die jeweilige Markierung auf der Höhe der zu kennzeichnenden Zeile angeordnet ist. Dadurch entsteht jedoch in bekannter Weise das Problem, daß der Druckträger nicht in seiner vollen, dem Verfahrweg des Druckkopfes entsprechenden Breite ausgenutzt werden kann, da ein dem Abstand zwischen Nadelführungsmundstück und Lesekopf entsprechender Rand beachtet werden muß. Es ist deshalb beispielsweise auch schon eine Anordnung verwirklicht worden, bei welcher der Sensor zum Lesen von Zeilenmarkierungen in Richtung der relativen Positionierbewegung von Druck- bzw. Lesekopf einerseits sowie Aufzeichnungsträger andererseits mit bestimmtem Abstand vor oder hinter dem Druck- bzw. Lesekopf angeordnet ist. Je höher die geforderte Positioniergenauigkeit ist, um so genauer muß dieser Abstand zwischen einem Bearbeitungskopf und einem Sensor eingehalten werden. Um etwa eine unbeabsichtigte Verstellung des Sensors zum Bearbeitungskopf auszugleichen oder um unterschiedliche Positionierungen durch den Sensor steuern zu können, ist es erforderlich, daß der Abstand zwischen Bearbeitungskopf und Sensor über eine Verstelleinrichtung justiert werden kann. Das bedeutet, daß zum genauen Positionieren von Gegenständen beispielsweise ein bearbeiteter Gegenstand nachgemessen und bei Feststellung eines Positionierfehlers der Ab-stand zwischen dem Bearbeitungskopf und dem Sensor manuell nachjustiert werden muß. Dieses Verfahren ist verhältnismäßig aufwendig und von der Genauigkeit und Geschicklichkeit der die Bearbeitungsmaschine bedienenden Person abhängig. Außerdem bedeutet die verstellbare Anordnung des Sensors und der Einbau einer Verstellvorrichtung einen zusätzlichen konstruktiven Aufwand, welcher die Maschine verteuert und fehleranfällig macht.

Es ist die Aufgabe der vorliegenden Erfindung, ein Verfahren der im Oberbegriff des Anspruches 1 genannten Art sowie eine Vorrichtung der im Oberbegriff des Anspruches 5 genannten Art anzugeben, welche ein Justieren des Abstandes zwischen Sensor und Bearbeitungskopf sowie den Einbau entsprechender Verstelleinrichtungen überflüssig machen.

Die Lösung dieser Aufgabe erfolgt durch die kennzeichnenden Teile der Ansprüche 1 und 5. Vorteilhafte Ausgestaltungen der Erfindung sind in den Unteransprüchen angegeben.

Der Abstand zwischen dem Sensor und dem Bearbeitungskopf braucht kein bestimmtes, vorgegebenes Maß einzuhalten. Vielmehr wird dieser Abstand jeweils bei der Positionierbewegung aus dem Verstellweg zwischen Markierungsposition und Leseposition ermittelt und mit einem vorgegebenen Sollweg verglichen; bei Auftreten einer Differenz zwischen gemessenem Verstellweg und Sollweg wird in einem Rechner ein Korrekturwert berechnet und an die Steuerung gegeben, die den gemessenen Verstellweg um den Korrekturwert berichtigt. Es kann deshalb auf ein bestimmtes, vorgegebenes Abstandsmaß zwischen Sensor und Bearbeitungskopf und insbesondere auch auf eine Justiereinrichtung zum Nachjustieren dieses Abstandes verzichtet werden.

Der beschriebene Vorgang kann grundsätzlich bei jedem zu bearbeitenden Gegenstand wiederholt werden. In einer Ausgestaltung des erfindungsgemäßen Verfahrens ist jedoch vor allem zum jeweiligen Positionieren mehrerer nacheinander zu bearbeitender gleicher Gegenstände vorgesehen, daß ein Eichdurchlauf mit einem ersten Gegenstand durchgeführt wird; der dabei ermittelte Korrekturwert wird in einem der Steuerung zugeordneten Speicher gespeichert und zum Positionieren eines bestimmten Loses von nachfolgenden Gegenständen verwendet. Der Eichdurchlauf kann beispielsweise in regelmäßigen Abständen oder auch jeweils nach Feststellen eines Positionierfehlers vorgenommen werden.

In weiterer Ausgestaltung des erfindungsgemäßen Verfahrens ist vorgesehen, daß der Eichdurchlauf mit einem gesonderten, für diesen Eichdurchlauf bestimmten Eichgegenstand durchgeführt wird. Bei der Anwendung in der Drucktechnik kann dieser Eichgegenstand ein beliebiges Blatt Papier sein.

Zur Durchführung des erfindungsgemäßen Verfahrens wird eine Einrichtung der im Anspruch 5 beschriebenen Art vorgeschlagen.

Der Abstand des Sensors zum Bearbeitungskopf braucht nicht genau festgelegt zu sein und eingehalten zu werden. Wenn der Gegenstand bei seiner Positionierbewegung gegenüber dem Bearbeitungskopf eine bestimmte, beispielsweise durch einen Anschlag definierte Markierungsposition einnimmt, wird durch den Bearbeitungskopf auf den Gegenstand eine Marke aufgebracht. Es ist außerdem eine Einrichtung vorgesehen, mit der der anschließend durchlaufene Verstellweg von der Markierungsposition bis in eine Leseposition gemes-sen werden kann, bei der die Marke vom Sensor erfaßt wird. Der gemessene Verstellweg wird in einer weiteren Einrichtung mit einem Sollweg verglichen. Bei Auftreten einer Differenz zwischen dem gemessenen Verstellweg und dem Sollweg wird in einem der Vergleichereinrichtung zugeordneten Rechner ein Korrekturwert ermittelt, der an die Postioniersteuerung gegeben wird, die dann den Verstellweg um den Korrekturwert berichtigt.

In einer weiteren Ausgestaltung der Erfindung ist der Positioniersteuerung ein Speicher zugeordnet, in welchem der berechnete Korrekturwert gespeichert werden kann. Damit ist die Möglichkeit gegeben, einen bei einem bearbeiteten Gegenstand ermittelten Korrekturwert für die Positionierung mehrerer nachfolgender Gegenstände zu verwenden.

Der Positionierantrieb umfaßt vorzugsweise einen Schrittmotor mit einem Impulsgeber zum Melden der durchgeführten Schritte, wobei die Einrichtung zum Messen des Verstellweges eine Einrichtung zum Zählen der Schritte des Schrittmotors ist. Die Genauigkeit der Vestellwegmessung ist dann von der Größe eines Transportschrittes abhängig. Dieser soll deshalb möglichst kleiner als die gewünschte Genauigkeit sein. Die Einrichtung zum Aufbringen der Markierung auf den zu bearbeitenden Gegenstand ist vorzugsweise eine Druckeinrichtung zum Aufdrucken einer Farbmarke, wobei der Sensor dann ein optischer Sensor ist. Bei einer Verwendung der vorliegenden Erfindung in der Drucktechnik wird die Markierung durch den ohnehin vorhandenen Druckkopf aufgebracht.

Die Farbmarke kann erfindungsgemäß auch aus magnetischer Tinte gebildet sein, wobei der Sensor ein optischer oder ein magnetischer Sensor sein kann.

In weiterer Ausgestaltung der Erfindung ist vorgesehen, daß der Sensor in Richtung der Positionierbewegung des Gegenstandes gegenüber dem Bearbeitungskopf hinter dem Bearbeitungskopf angeordnet ist. Der Gegenstand behält dann während des gesamten Positioniervorganges eine Positionierbewegungsrichtung bei, wobei auf einem relativ zum Bearbeitungskopf voreilenden Ende des Gegenstandes die Marke aufgebracht wird; wenn dieses voreilende Ende mit der Marke den Sensor erreicht, ist ein nachfolgender, zu bearbeitender Teil des Gegenstandes im Bereich des Bearbeitungskopfes.

Die Erfindung ist durch die beigelegten Ansprüche 1 und 5 definiert.

Ein Ausführungsbeispiel der Erfindung ist in der Zeichnung dargestellt und im folgenden näher beschrieben. Es zeigen:
- Fig. 1a - 1c: schematisch einen Drucker mit einer Transporteinrichtung zum Positionieren eines Druckträgers, einem Druckkopf und einem Sensor, wobei der Druckträger in drei verschiedenen Betriebsphasen dargestellt ist;
- Fig. 2: ein Flußdiagramm, mit welchem der Vorgang beim Messen des Abstandes zwischen Druckkopf und Sensor beschrieben wird.

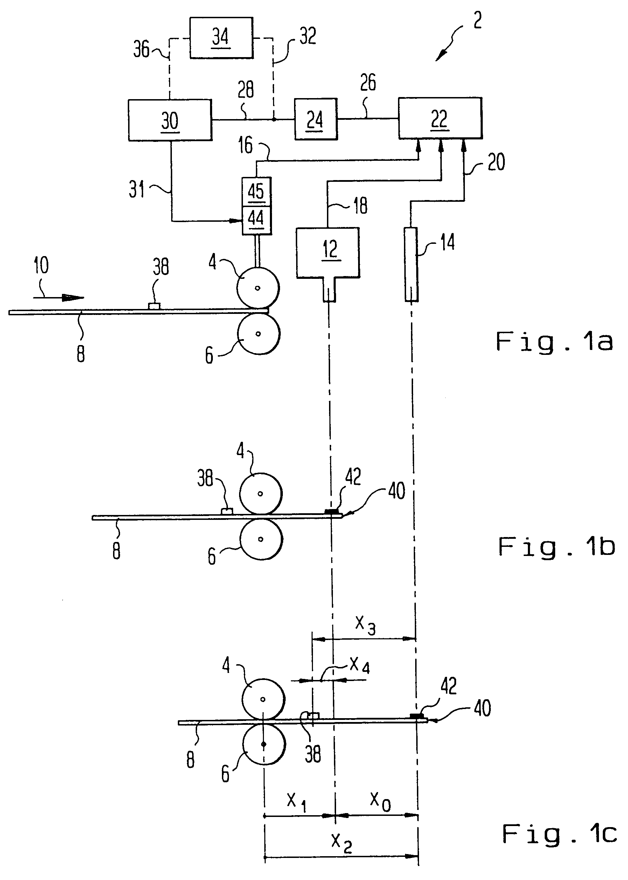

Der in Figur 1 dargestellte Drucker 2 umfaßt eine aus einer oberen Transportrolle 4 und einer unteren Transportrolle 6 bestehende Transporteinrichtung zum Transportieren eines Druckträgers 8 in Richtung des Pfeiles 10. In Richtung dieser Positionierbewegung 10 hinter der Transporteinrichtung ist ein Druckopf (Bearbeitungskopf) 12 zum Bedrucken des Druckträgers 8 angeordnet. Hinter dem Druckkopf 12 und in einem beliebigen Abstand X₀ dazu ist ein Sensor 14 vorgesehen.

Die Transporteinrichtung 4, 6, der Druckkopf 12 und der Sensor 14 sind über zugeordnete Leitungen 16, 18, 20 mit einer Wegmeßeinrichtung 22 verbunden. Die Wegmeßeinrichtung 22 ist ihrerseits mit einer Einrichtung 24 zum Vergleichen des von der Wegmeßeinrichtung 22 gemessenen Weges mit einem vorgegebenen Sollwert über eine Leitung 26 verbunden. An die Vergleichereinrichtung 24 ist über eine Leitung 28 eine Steuerung 30 angeschlossen, die einen Antriebsmotor 44 für den Antrieb der Transporteinrichtung 4, 6 über eine Leitung 31 ansteuert. Außerdem ist der Steuerung 30 über eine Leitung 32 ein Speicher 34 zugeordnet, welcher über eine Leitung 32 mit der Vergleichereinrichtung 24 und über eine Leitung 36 mit der Steuerung 30 verbunden ist.

Um den Druckträger 8 zum Druckkopf 12 so zu positionieren, daß eine zu bedruckende Stelle 38 genau zum Druckkopf 12 ausgerichtet ist, geht man folgendermaßen vor: Der Druckträger 8 wird in Richtung des Pfeiles transportiert, bis der vordere Bereich 40 des Druckträgers 8 unter dem Druckkopf 12 durchläuft. In diesem Augenblick wird auf den Druckträger 8 eine Marke 42 aufgebracht. Gleichzeitig geht über die Leitung 18 ein Signal an die Wegmeßeinrichtung 22 (Fig. 1b), wodurch die Markierungsposition X₁ gespeichert wird.

Sodann wird der Druckträger 8 in Richtung des Pfeiles 10 weitertransportiert, wobei der Transportweg des die Transportrollen 4, 6, antreibenden Antriebsmotors 44 gezählt werden. Wenn die Marke 42 den Sensor 14 passiert (Fig. 1c), gibt der Sensor 14 über die Leitung 20 ein Signal an die Wegmeßeinrichtung 22, wodurch die Leseposition X₂ gespeichert wird.

Der Antriebsmotor 44 ist als Schrittmotor ausgebildet und mit einem Impulsgeber 45 gekoppelt, welcher die vom Schrittmotor tatsächlich ausgeführten Schritte über die Leitung 16 an die Wegmeßeinrichtung 22 gibt, wo sie gezählt werden.

Der Abstand X₀ zwischen dem Druckkopf 12 und dem Sensor 14 ergibt sich aus der Gleichung X₀=X₂-X₁. Dieser Abstand entspricht der Anzahl der zwischen den Positionen X₁ und X₂ gezählten Schritte des Schrittmtors 44.

Der in der Wegmeßeinrichtung gemessene Verstellweg X₀ wird in die Vergleichereinrichtung 24 eingegeben und dort mit einem vorgebbaren, gespeicherten Sollweg verglichen. Dieser Sollweg entspricht dem Abstand X₃ zwischen der Marke 42 und der zu bedruckenden Stelle 38. Wenn, wie in Figur 1c dargestellt, der Sollweg X₃ vom gemessenen Verstellweg X₀ abweicht, gibt die Vergleichereinrichtung 24 einen aus dieser Differenz ermittelten Korrekturwert X₄ an die Steuerung 30, die den Druckträger 8 um das Maß dieses Korrekturwertes X₄ nachpositioniert, bis die zu bedruckende Stelle 38 zum Druckkopf 12 genau ausgerichtet ist.

Wenn ein Korrekturwert nicht für jeden zu bearbeitenden Gegenstand neu ermittelt werden soll, besteht die Möglichkeit, daß die Vergleichereinrichtung 24 diesen Korrekturwert an den Speicher 34 gibt und daß sich die Steuerung 30 den Korrekturwert bei jedem Bearbeitungsvorgang aus dem Speicher 34 abruft. Der Korrekturwert kann von Zeit zu Zeit in einem Eichdurchlauf neu ermittelt werden, wie bereits vorne erläutert wurde.

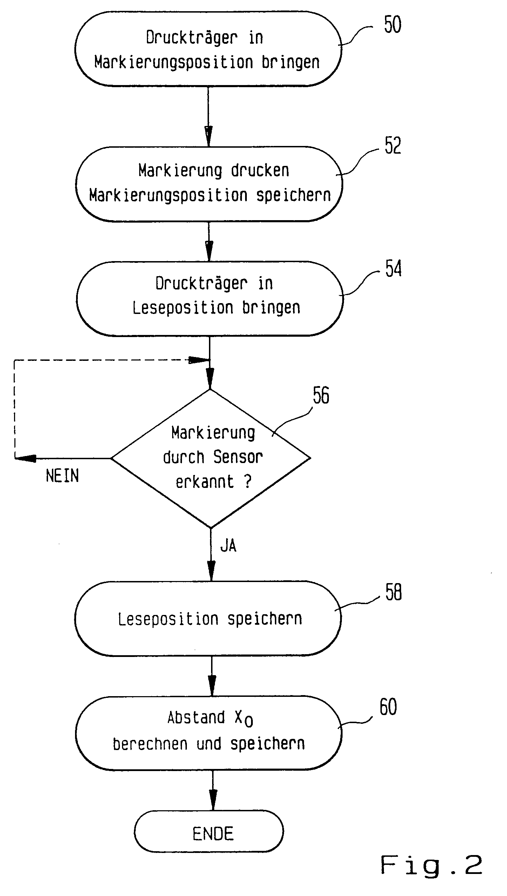

Figur 2 zeigt ein Flußdiagramm, welches den Ablauf zum ermitteln des Abstandes X₀ zwischen dem Druckkopf 12 und dem Sensor 14 erläutert. Zunächst wird im Verfahrensschritt 50 der Druckträger aus einer in Figur 1a dargestellten Anfangsposition in die in Figur 1b dargestellte Markierungsposition X₁ gebracht. In einem Verfahrensschritt 52 wird die Marke 42 aufgedruckt und die Position X₁ in der Wegmeßeinrichtung 22 gespeichert. In einem Verfahrensschritt 54 wird der Druckträger 8 in eine Leseposition X₂ gemäß Figur 1c gebracht. Wenn der Sensor 14 im Verfahrensschritt 56 die Marke 42 erkannt hat, wird die Position X₂ des Druckträgers 8 im Verfahrensschritt 58 gespeichert. Wenn die Marke 42 nicht erkannt wird (NEIN-Pfeil), dann wird beispielsweise ein Fehlersignal ausgegeben oder der Vorgang wiederholt. In einem folgenden Verfahrensschritt 60 wird der Abstand X₀ berechnet und entweder direkt von der Steuerung 30 verwertet oder gegebenenfalls im Speicher 34 zur Verwertung bei darauffolgenden Druckvorgängen gespeichert.

Es sei bemerkt, daß im dargestellten Ausführungsbeispiel der Druckträger 8 relativ zum Druckkopf 12 und zum Sensor 14, die fest im Drucker angeordnet sind, bewegt wird. Es besteht auch die Möglichkeit, den Druckträger fest im Drucker einzuspannen und mittels einer Transporteinrichtung den Druckkopf und den Sensor relativ zum Druckträger zu bewegen, wodurch sich an dem beschriebenen Verfahren im wesentlichen nichts ändert.

## Patentansprüche

1. Verfahren zum Positionieren eines zu bearbeitenden Gegenstandes und eines Bearbeitungskopfes einer Bearbeitungsmaschine zueinander in eine gegenseitige Bearbeitungsposition, wobei eine durch einen Bearbeitungskopf auf den Gegenstand aufgebrachte Markierung von einem in Richtung der relativen Positionierbewegung mit Abstand zum Bearbeitungskopf angeordneten Sensor erfaßt und zum Erzeugen eines Steuersignals für eine Positioniersteuerung verwertet wird, **gekennzeichnet** durch folgende Verfahrensschritte:
- der Gegenstand (8) und der Bearbeitungskopf (12) werden während der Positionierbewegung gegeneinander bis in eine Markierungsposition (X₁) verstellt,
- die Markierung (42) wird aufgebracht,
- der Gegenstand (8) und der Bearbeitungskopf (12) werden gegeneinander verstellt, bis in einer Leseposition (X₂) die Markierung (42) vom Sensor (14) erfaßt wird,
- der Verstellweg (X₀) zwischen Markierungsposition (X₁) und Leseposition (X₂) wird gemessen und mit einem vorgegebenen Sollweg (X₃) verglichen,
- bei Auftreten einer Differenz zwischen gemessenem Verstellweg (X₀) und Sollweg (X₃) wird ein Korrekturwert ermittelt,
- der gemessene Verstellweg (X₀) wird um den Korrekturwert (X₄) korrigiert.

2. Verfahren nach Anspruch 1, dadurch **gekennzeichnet**, daß der Verstellweg (X₀) durch Zählen von vorbekannten gleichen Verstellschritten gemessen wird.

3. Verfahren zum jeweiligen Positionieren mehrerer nacheinander zu bearbeitender Gegenstände unter Verwendung des Verfahrens nach einem der Ansprüche oder 2, dadurch **gekennzeichnet**, daß ein Eichdurchlauf mit einem ersten Gegenstand durchgeführt sowie ein Eich-Korrekturwert bestimmt und in einem der Steuerung (30) zugeordneten Speicher (34) gespeichert wird, und daß ein bestimmtes Los von nachfolgenden Gegenständen unter Verwendung des Eich-Korrekturwertes positioniert wird.

4. Verfahren nach Anspruch 3, dadurch **gekennzeichnet**, daß der Eichdurchlauf mit einem gesonderten, für diesen Eichdurchlauf bestimmten Eichgegenstand durchgeführt wird.

5. Einrichtung zum Durchführen des Verfahrens nach einem der Ansprüche 1 bis 4, umfassend einen Bearbeitungskopf mit Mitteln zum Aufbringen einer Markierung auf einen Gegenstand, ferner umfassend eine Transporteinrichtung für die gegenseitige Verstellung von Gegenstand und Bearbeitungskopf, einen in Verstellrichtung mit Abstand zum Bearbeitungskopf angeordneten Sensor und eine mit dem Sensor verbundene Positioniersteuerung für die Verstelleinrichtung, **gekennzeichnet** durch
- eine Einrichtung (22) zum Messen des relativen Verstellweges (X₀) des Gegenstandes (8) gegenüber dem Bearbeitungskopf (12) zwischen einer Markierungsposition (X₁), bei der der Bearbeitungskopf (12) eine Markierung (42) auf den Gegenstand (8) aufbringt, und einer Leseposition (X₂), bei der die Markierung (42) den Sensor (14) passiert,
- eine Einrichtung (24) zum Vergleichen des gemessenen Verstellweges (X₀) mit einem vorgegebenen Sollweg (X₃) und zum Ermitteln einer Differenz zwischen dem gemessenen Verstellweg (X₀) und dem Sollweg (X₃), die als Korrekturwert (X₄) für den Verstellweg (X₀) an die Positioniersteuerung (30) gegeben wird.

6. Einrichtung nach Anspruch 5, dadurch **gekennzeichnet**, daß ein Speicher (34) zum Speichern des errechneten Korrekturwertes (X₄)vorgesehen ist.

7. Einrichtung nach Anspruch 5 oder 6, dadurch **gekennzeichnet**, daß die Positioniersteuerung (30) einen Schrittmotor (44) umfaßt, und daß die Einrichtung (22) zum Messen des Verstellweges (X₀) eine Einrichtung zum Zählen der Schritte des Schrittmotors (44) ist.

8. Einrichtung nach einem der Ansprüche 5 bis 7, dadurch **gekennzeichnet**, daß der Bearbeitungskopf (12) eine Druckeinrichtung zum Aufdrucken einer Farbmarke (42) ist und daß der Sensor (14) ein optischer Sensor ist.

9. Einrichtung nach Anspruch 8, dadurch **gekennzeichnet**, daß die Farbmarke (42) aus magnetischer Tinte gebildet ist und daß der Sensor (14) ein optischer oder ein magnetischer Sensor ist.

10. Einrichtung nach einem der Ansprüche 5 bis 9, dadurch **gekennzeichnet**, daß der Sensor (14) in Richtung (10) der Positionierbewegung des Gegenstandes (8) relativ zum Bearbeitungskopf (12) hinter dem Bearbeitungskopf (12) angeordnet ist.

## Claims

1. Method for positioning an object to be machined and a machine head of a machine tool relative to one another in a mutual machining position, in which a mark applied to the object by a machine head is detected by a sensor arranged at a distance from the machine head in the direction of the relative positioning movement and is evaluated for generating a control signal for a positioning controller, characterized by the following method steps:
- during the positioning movement the object (8) and the machine head (12) are displaced with respect to one another until they are in a mark position (X₁),
- the mark (42) is applied,
- the object (8) and the machine head (12) are displaced with respect to one another until the mark (42) is detected by the sensor (14) in a read position (X₂),
- the displacement path (X₀) between mark position (X₁) and read position (X₂) is measured and compared with a predetermined nominal path (X₃),
- a correction value is calculated if there is a difference between measured displacement path (X₀) and nominal path (X₃),
- the measured displacement path (X₀) is corrected by the correction value (X₄).

2. Method according to Claim 1, characterized in that the displacement path (X₀) is measured by counting previously known equal displacement steps.

3. Method for the respective positioning of a plurality of objects to be successively machined using the method according to one of Claims 1 or 2, characterized in that a calibration pass is carried out with a first object and also a calibration correction value is determined and stored in a memory (34) assigned to the controller (30), and in that a specific batch of subsequent objects is positioned using the calibration correction value.

4. Method according to Claim 3, characterized in that the calibration pass is carried out using a separate calibration object intended for said calibration pass.

5. Device for carrying out the method according to one of Claims 1 to 4, comprising a machine head with means for applying a mark to an object, further comprising a transport device for the mutual displacement of object and machine head, a sensor arranged at a distance from the machine head in the displacement direction, and a positioning controller for the displacement device which is connected to the sensor, characterized by
- a device (22) for measuring the relative displacement path (X₀) of the object (8) with respect to the machine head (12) between a mark position (X₁), at which the machine head (12) applies a mark (42) to the object (8), and a read position (X₂), at which the mark (42) passes the sensor (14),
- a device (24) for comparing the measured displacement path (X₀) with a predetermined nominal path (X₃) and for calculating a difference between the measured displacement path (X₀) and the nominal path (X₃), which is output to the positioning controller (30) as correction value (X₄) for the displacement path (X₀).

6. Device according to Claim 5, characterized in that a memory (34) is provided for storing the correction value (X₄) calculated.

7. Device according to Claim 5 or 6, characterized in that the positioning controller (30) comprises a stepping motor (44), and in that the device (22) for measuring the displacement path (X₀) is a device for counting the steps of the stepping motor (44).

8. Device according to one of Claims 5 to 7, characterized in that the machine head (12) is a printing device for printing a colour mark (42), and in that the sensor (14) is an optical sensor.

9. Device according to Claim 8, characterized in that the colour mark (42) is formed by magnetic ink, and in that the sensor (14) is an optical or a magnetic sensor.

10. Device according to one of Claims 5 to 9, characterized in that the sensor (14) is arranged behind the machine head (12) in the direction (10) of the positioning movement of the object (8) relative to the machine head (12).

## Revendications

1. Procédé pour mettre un objet à usiner et une tête d'usinage d'une machine d'usinage l'un par rapport à l'autre dans une position mutuelle d'usinage, qui consiste à détecter un repère, appliqué sur l'objet par une tête d'usinage, par un capteur disposé à distance de la tête d'usinage dans la direction du déplacement relatif de mise en position et à l'utiliser pour la production d'un signal de commande de mise en position, caractérisé par les étapes opératoires suivantes:
- l'objet (8) et la tête d'usinage (12) sont déplacés l'un par rapport à l'autre pendant le déplacement de mise en position jusque dans une position de repérage (X₁),
- le repère (42) est apposé,
- l'objet (8) et la tête d'usinage (12) sont déplacés l'un par rapport à l'autre jusqu'à ce que, dans une position de lecture (X₂), le repère (42) soit détecté par le capteur (14),
- le trajet de déplacement (X₀) entre la position de repérage (X₁) et la position de lecture (X₂) est mesuré et est comparé à un trajet de consigne (X₃), donné à l'avance,
- lors de l'apparition d'une différence entre le trajet de déplacement (X₀) mesuré et le trajet de consigne (X₃), une valeur de correction est déterminée,
- le trajet de déplacement (X₀) mesuré est corrigé de la valeur de correction (X₄).

2. Procédé suivant la revendication 1, caractérisé par le fait que le trajet de déplacement (X₀) est mesuré par comptage de pas de déplacement identiques connus à l'avance.

3. Procédé pour mettre en position plusieurs objets à usiner successivement, en mettant en oeuvre le procédé suivant l'une des revendications 1 ou 2, caractérisé en ce qu'il consiste à effectuer un cycle d'étalonnage avec le premier objet, ainsi qu'à déterminer une valeur de correction d'étalonnage et à la mémoriser dans une mémoire (34) associée à une unité de commande (30), et à mettre en position un certain lot d'objets successifs en utilisant la valeur de correction d'étalonnage.

4. Procédé suivant la revendication 3, caractérisé en ce qu'il consiste à effectuer le cycle d'étalonnage avec un objet d'étalonnage particulier, prévu pour ce cycle d'étalonnage.

5. Dispositif pour la mise en oeuvre du procédé suivant l'une des revendications 1 à 4, comportant une tête d'usinage ayant des moyens d'apposition d'un repère sur un objet et comportant en outre un dispositif de transport pour le déplacement réciproque d'un objet et de la tête d'usinage, un capteur disposé à distance de la tête d'usinage dans la direction de déplacement et, reliée au capteur, une unité de commande de mise en position pour le dispositif de déplacement, caractérisé par
- un dispositif (22) de mesure du trajet de déplacement (X₀) relatif de l'objet (8) par rapport à la tête d'usinage (12) entre une position de repérage (X₁), dans laquelle la tête d'usinage (12) appose un repère (42) sur l'objet (8), et une position de lecture (X₂), dans laquelle le repère (42) passe devant le capteur (14),
- un dispositif (24) de comparaison du trajet de déplacement (X₀) mesuré à un trajet de consigne (X₃) donné à l'avance et de détermination d'une différence entre le trajet de déplacement (X₀) mesuré et le trajet de consigne (X₃), qui est envoyée en tant que valeur de correction (X₄) pour le trajet de déplacement (X₀) à l'unité de commande (30) de mise en position .

6. Dispositif suivant la revendication 5, caractérisé par le fait qu'une mémoire (34) est prévue pour mémoriser la valeur de correction (X₄) calculée .

7. Dispositif suivant la revendication 5 ou 6, caractérisé par le fait que l'unité de commande (30) de mise en position comprend un moteur pas-à-pas (44), et que le dispositif (22) de mesure du trajet de déplacement (X₀) est un dispositif destiné à compter les pas du moteur pas-à-pas (44).

8. Dispositif suivant l'une des revendications 5 à 7, caractérisé par le fait que la tête d'usinage (12) est un dispositif d'impression pour l'impression d'un repère coloré (42) et que le capteur (14) est un capteur optique.

9. Dispositif suivant la revendication 8, caractérisé par le fait que le repère coloré (42) est en une encre magnétique et que le capteur (14) est un capteur optique ou un capteur magnétique.

10. Dispositif suivant l'une des revendications 5 à 9, caractérisé par le fait que le capteur (14) est disposé dans la direction (10) du déplacement de mise en position de l'objet (8) par rapport à la tête d'usinage (12), en arrière de la tête d'usinage.
